# EUROPEAN PATENT APPLICATION

(11) **EP 2 048 894 A1**
(43) Date of publication of application: **15.04.2009**
(21) Application number: 07790821.8
(22) Date of filing: 17.07.2007
(51) Int. Cl.: H04R 1/02, H04M 1/03

(54) **PORTABLE TERMINAL DEVICE AND HOUSING FOR PORTABLE TERMINAL DEVICE**

(30) Priority: 03.08.2006 JP 2006211666
(71) Applicant: NEC Corporation, Minato-ku Tokyo 108-8001 (JP)
(72) Inventor: KURODA, Jun, Tokyo 108-8001 (JP); TAKAHASHI, Masatake, Tokyo 108-8001 (JP)
(74) Representative: Glawe, Delfs, Moll
(86) International application number: PCT/JP2007/064059
(87) International publication number: WO 2008/015901

(57) **Abstract**

The present invention provides a portable terminal device, such as a portable telephone terminal device including a speaker sound hole in a case side and a main display portion in a case front, in which sound pressure of a terminal front direction can be increased. A sound generated from a speaker 103 accommodated in a case 1 is induced to a terminal side by a speaker sound hole 106. A convex portion 109 is formed in a case portion closer to a rear side than the speaker sound hole 106. The convex portion 109 serves as a sound barrier for preventing a sound ejected from the speaker sound hole 106 from being directed to a terminal rear direction. As a result, sound pressure of a terminal front direction is increased.

## Description

### Technical Field

The present invention relates to a portable terminal device such as a portable telephone terminal device in which a speaker sound hole is installed at a side of a case and a main display unit is installed at a front of a case and, more particularly, to a technology for improving sound pressure directivity of a direction of a terminal front on which the main display unit is installed.

### Background Art

Recently, a portable telephone terminal device which includes one or two speakers inside a case and a main display unit constituted by a liquid crystal display (LCD) on a case front has been widely used. In such a portable telephone terminal device, a speaker sound hole for inducing a sound generated from the speaker to the outside of the case is formed, but it is usually formed at a back or a side of the case due to a spatial restriction (e.g., see Patent Documents 1 and 2).

In a conventional portable telephone terminal device disclosed in Patent Document 1, a main display unit is installed at a front of a case, and a speaker sound hole is installed at a back of a case. An ejective sound control member is disposed at the back of the case to cover the speaker sound hole, and an opening for ejecting a sound generated from a speaker toward a case top direction is formed in the ejective sound control member. Due to such a configuration, when the portable telephone terminal device in a chest pocket receives a call, a user can easily listen a call sound generated from the speaker.

In a conventional portable telephone terminal device disclosed in Patent Document 2, speaker sound holes are disposed at case sides, and both are separated from each other, thereby improving a stereo effect. FIG. 1 shows a configuration example of the conventional portable telephone terminal of Patent Document 2 device in which the speaker sound holes are installed at the case side, and FIGs. 1(A), 1(B) and 1(C) are a front view, a side view and a back view of the portable telephone terminal device, respectively.

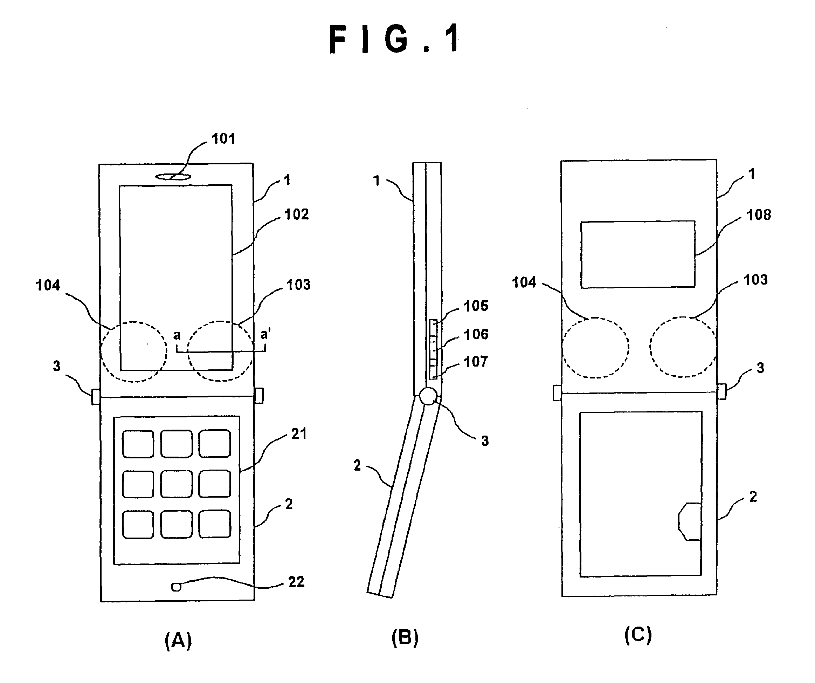

Referring to FIG. 1(A), the conventional portable telephone terminal device includes a first case 1 and a second case 2, and the first case 1 and the second case 2 are rotatably connected by a hinge portion 3.

A receiver 101 and a main display unit 102 constituted by the LCD are installed at a front of the first case 1, and two speakers 103 and 104 are accommodated in the case 1. A key manipulating unit 21 including a numeric keypad and a microphone 22 are installed at a front of the second case 2.

Referring to FIG. 1(B), three speaker sound holes 105 to 107 for inducing a sound generated from the speaker 103 to the case outside are installed at a side of the first case 1. In FIG. 1(B), the speaker sound holes 105 to 107 are installed closer to a rear side than a center of the side. Even though not shown in FIG. 1(B), a speaker sound hole for inducing a sound generated from the speaker 104 to the case outside is installed on an opposite surface to the surface in which the speaker sound holes 105 to 107 are installed.

Referring to FIG. 1(C), a sub display unit 108 constituted by the LCD is installed at a back of the first case 1.

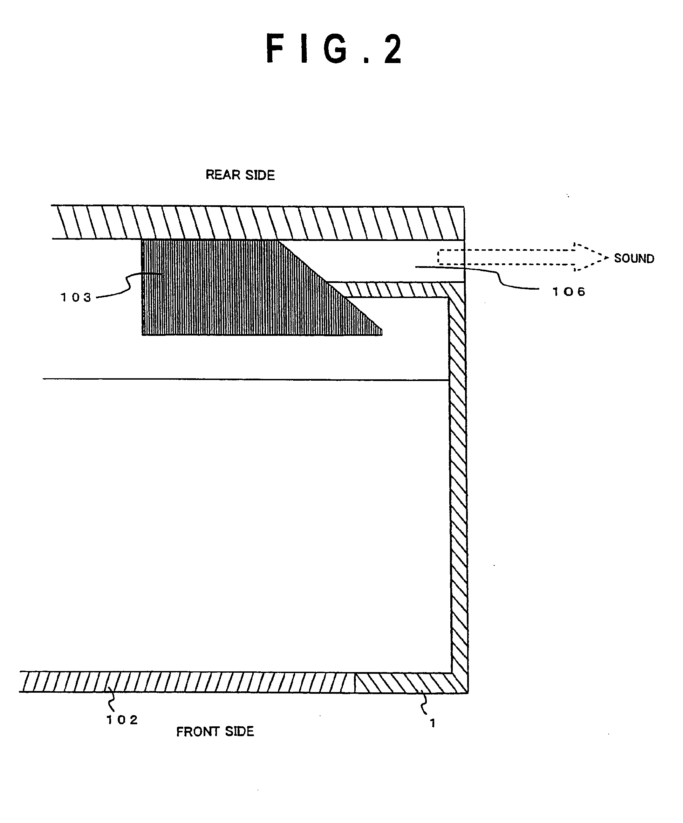

FIG. 2 is a cross-sectional view taken along a line a-a' of FIG. 1(A). Referring to FIG. 2, the speaker 103 is fixed to a backside of the case 1, and the sound generated from the speaker 103 is induced to the outside of the case 1 through the sound hole 106. In FIG. 2, substrates and electron parts are not shown.
Patent Document 1: Japanese Patent Application Laid-Open Publication No. 2002-344602.
Patent Document 2: Japanese Patent Application Laid-Open Publication No. 2006-157464.

### Disclosure of the Invention

### Problems to be solved by the invention

Recently, various functions as well as an original call function have been added to the portable telephone terminal device. For example, like a television telephone function or a television receiving function, a function for listening a voice output from the speaker while watching an image displayed on the main display unit is also added.

In a case of listening the sound generated from the speaker while watching the image by using the television telephone function, it is important to keep sound pressure of the case front direction high, but such a point has not been considered in the portable telephone terminal devices disclosed in Patent Documents 1 and 2 mentioned above.

In the conventional portable telephone terminal device disclosed in Patent Document 1, the ejective sound control member for covering the speaker sound hole is disposed at a case rear, and the opening for ejecting the sound generated from the speaker to a case top direction is formed in the ejective sound control member, and so sound pressure of a case top direction is increased, but sound pressure of a case front direction (terminal front direction) cannot be increased.

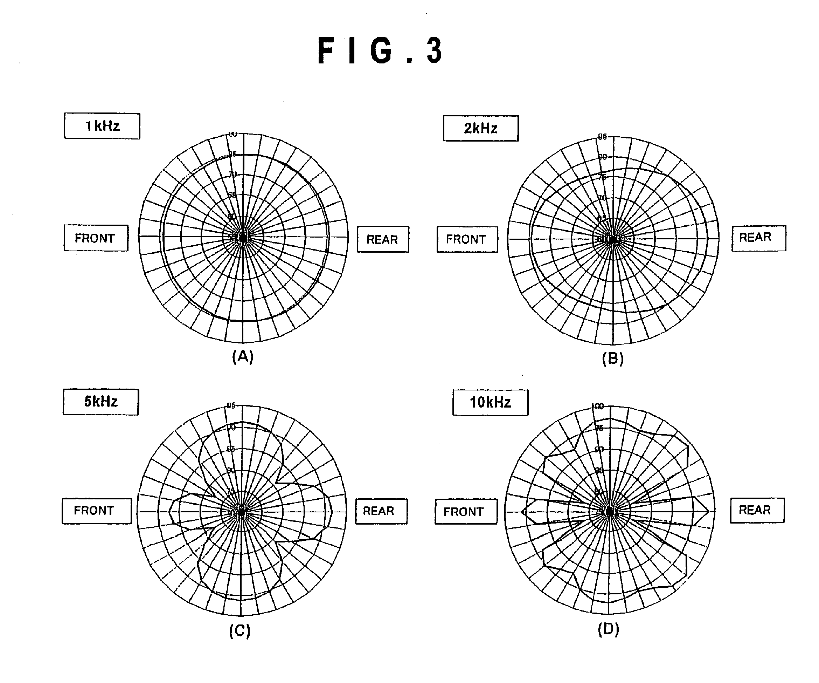

Also, in the conventional portable telephone terminal device disclosed in Patent Document 2, since the speaker sound hole is installed at a case side, stereo effect can be increased, but sound pressure of a case front direction cannot be increased. FIGs. 3(A) to 3(D) show simulation results for sound pressure directivity characteristics of the portable telephone terminal device in which the speaker sound holes 105 to 107 are disposed at a rear side of a case side as shown in FIGs. 1 and 2. FIGs. 3(A), 3(B), 3(C), and 3(D) show simulation results for sound pressure directivity characteristics at frequencies of 1 kHz, 2 kHz, 5 kHz, and 10 kHz, respectively. The simulation has been performed under the following condition. The length, the width and the thickness of the cases 1 and 2 are 10 cm, 5 cm and 1 cm, respectively. The sound hole area size is 15 mm², the sound hole length is 1 mm, and particle speed of 1 m/sec is conferred as a boundary condition at a sound hole edge. The sound pressure simulation has been performed at a distance of 10 cm after the case 1 was rotated centering on a central axis of a longitudinal direction of the case 1.

As shown in FIG. 3(A), the sound pressure directivity rarely leans at a low frequency 1 kHz, but the sound pressure directivity greatly leans at a high frequency of 2 kHz or more. At a frequency of 2 kHz, as shown in FIG. 3(B), the sound pressure of a front direction of the case 1 rather than a rear direction thereof is lowered. Also, at frequencies of 5 kHz and 10 kHz, as shown in FIGs. 3(C) and 3(D), the sound pressure directivities are also expanded in a side direction, and so the sound pressure of a front side is increasingly lowered.

Therefore, an exemplary object of the present invention is to increase sound pressure of a terminal front direction in a portable terminal device in which a speaker sound hole is installed in a terminal side.

### Means for solving the problems

A first portable terminal device according to an exemplary aspect of the present invention includes a case, wherein a case portion, near an outlet of a sound hole for inducing a sound generated from a built-in speaker to a terminal side, is processed in a shape for increasing sound pressure of a terminal front direction.

A second portable terminal device of the first potable terminal device according to the exemplary aspect of the present invention is characterized in that, a case portion closer to a terminal rear side than the sound hole protrudes more in a horizontal direction than a case portion of a terminal front side.

A third portable terminal device of the second potable terminal device according to the exemplary aspect of the present invention is characterized in that, a convex portion is formed in a case portion closer to a terminal rear side than the sound hole.

A fourth portable terminal device of the second or third potable terminal device according to the exemplary aspect of the present invention is characterized in that, an inclined portion is formed in a case portion closer to a terminal rear side than the sound hole.

A fifth portable terminal device of the first or second potable terminal device according to the exemplary aspect of the present invention is characterized in that, a notch portion is formed in a case portion closer to a terminal front side than the sound hole.

A first case for a portable terminal device according to an exemplary aspect of the present invention is characterized in that a case portion, near an outlet of a sound hole for inducing a sound generated from a built-in speaker to a terminal side, is processed in a shape for increasing sound pressure of a terminal front direction.

A second case for a portable terminal device of the first case for the portable terminal device according to the exemplary aspect of the present invention is characterized in that, a case portion closer to a terminal rear side than the sound hole protrudes more in a horizontal direction than a case portion of a terminal front side.

### (Effect)

A sound generated from a speaker is induced to a terminal side by a sound hole and is ejected to the outside. Since a case portion near an outlet of the sound hole is processed in a shape for increasing sound pressure of a terminal front direction, the sound pressure of a terminal front direction is increased. As a result, in a case of listening a sound generated from the speaker while watching an image displayed on a main display unit disposed on a terminal front side, it is easy to listening the sound generated from the speaker.

As a shape for increasing sound pressure of a terminal front direction, for example, a case portion closer to a terminal rear side than the sound hole is formed to protrude more in a horizontal direction than a case portion of a terminal front side.

### Advantages of the invention

According to the present invention, in a portable telephone terminal device including a sound hole on its side, there is an advantage of increasing sound pressure of a terminal front direction. As a result, in a case of listening a sound while watching an image displayed on a main display unit disposed on a terminal front, it is easy to listen the sound. It is because a case portion near an outlet of the sound hole is processed in a shape for increasing the sound pressure of a terminal front direction.

Next, exemplary embodiments of the present invention will be described in detail with reference to attached drawings.

### Best Mode for Carrying out the Invention

### (First exemplary embodiment)

A portable telephone terminal device according to a first exemplary embodiment of the present invention will be described. In the portable telephone terminal device according to the first exemplary embodiment of the present invention, in order to increase sound pressure of a front direction, a convex portion is formed closer to a rear side than a speaker sound hole of a terminal side.

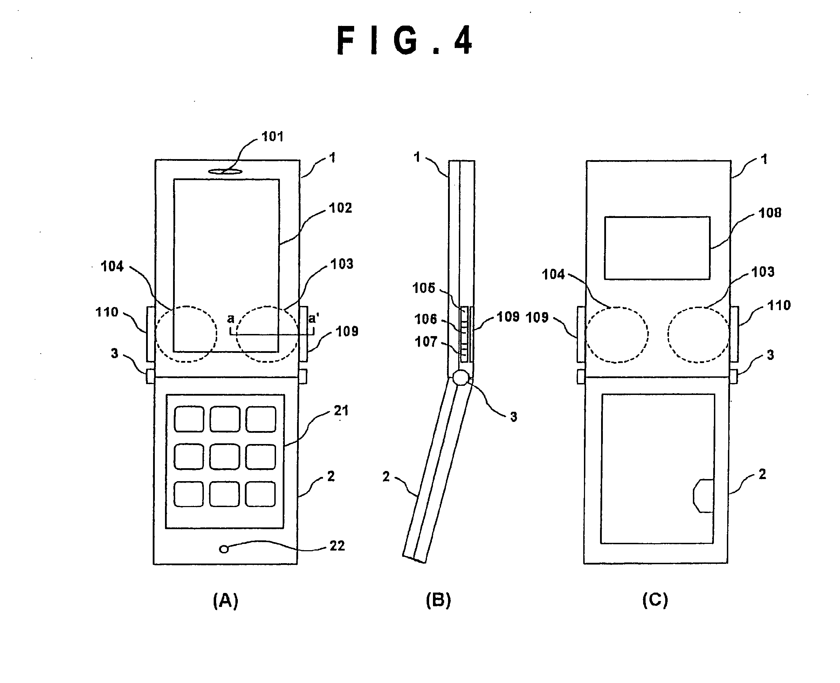

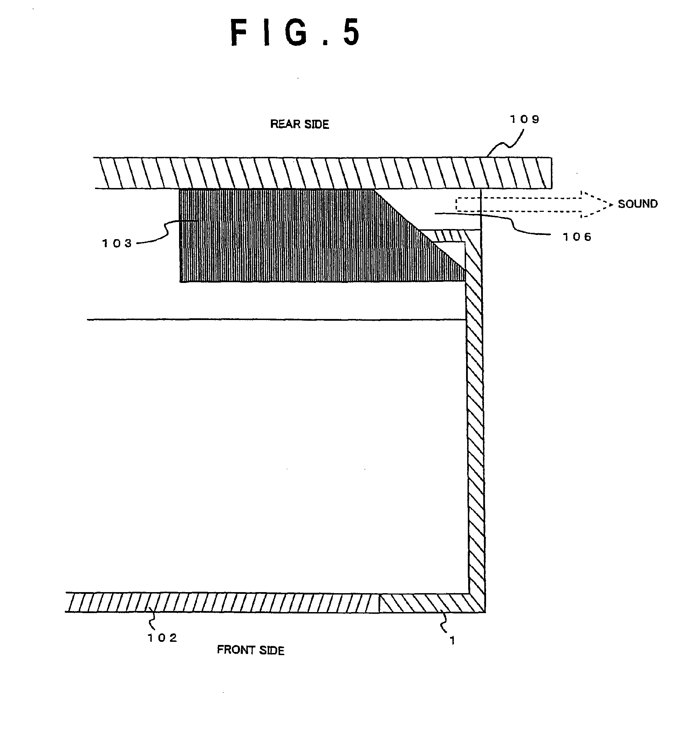

FIGs. 4(A) to 4(C) show the portable telephone terminal device according to the first exemplary embodiment of the present invention, and FIGs. 4(A), 4(B) and 4(C) are a front view, a side view and a back view of the portable telephone terminal device, respectively. FIG. 5 is a cross-sectional view taken along a line a-a' of FIG. 4(A). In FIGs. 4 and 5 and FIGs. 1 and 2, same reference numerals denote same parts.

Referring to FIGs. 4 and 5, speakers 103 and 104 of an electronic driving mode, an electro-kinetic driving mode, an electrostatic driving mode or a piezoelectric driving mode are built in a case 1, and three speaker sound holes 105 to 107 for inducing a sound generated from the speaker 103 to the outside of the case 1 are installed at a right side of the case 1. A convex portion 109 which protrudes in a horizontal direction is formed in a case portion closer to a terminal rear side than the speaker sound holes 105 to 107. The horizontal length of the convex portion 109 may be, for example, approximately 2 mm and the vertical length of the convex portion 109 may be the same as the length of the parts in which the speaker sound holes 105 to 107 are disposed. The vertical length of the convex portion 109 may be longer than the length of the portion in which the speaker sound holes 105 to 107 are disposed. Even though not shown in FIGs. 4 and 5, three speaker sound holes are installed at a left side of the case 1, and a convex portion 110 having the same shape as the convex portion 109 is formed in a case portion closer to a terminal rear side than the speaker sound holes.

The convex portions 109 and 110 serve as a sound barrier for preventing a sound ejected from the speaker sound holes 105 to 107 from being directed to a case rear side. As a result, sound pressure of a case rear direction is weakened, thereby increasing sound pressure of a case front direction.

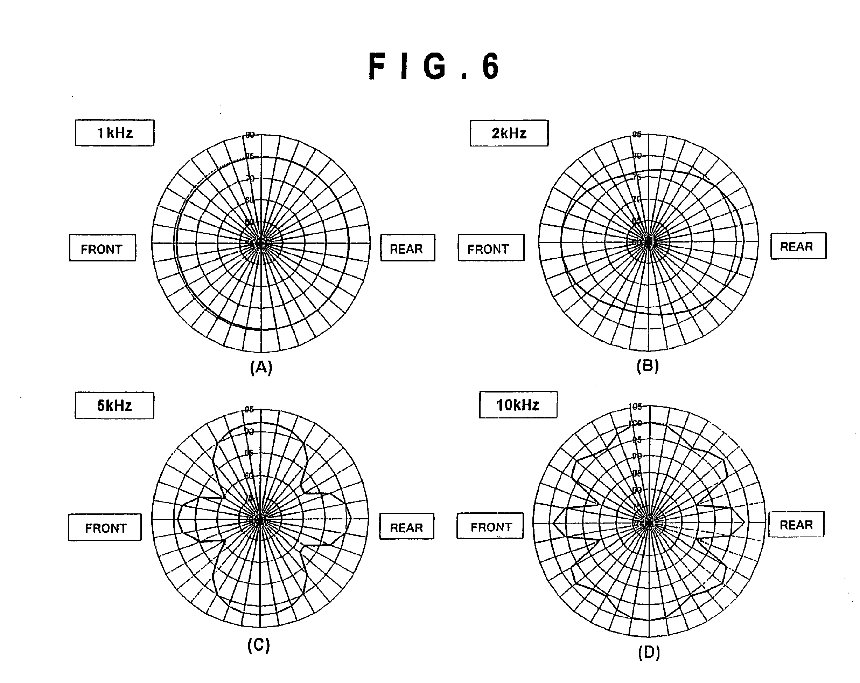

FIGs. 6(A) to 6(D) show simulation results for sound pressure directivity characteristics of the portable telephone terminal device according to the first exemplary embodiment of the present invention. FIGs. 6(A), 6(B), 6(C), and 6(D) show simulation results for sound pressure directivity characteristics at frequencies of 1 kHz, 2 kHz, 5 kHz, and 10 kHz, respectively. When the simulation is performed, the horizontal length and the vertical length of the convex portions 109 and 110 are set to 2 mm and 25 mm, respectively, and the other conditions are same as the simulation of the conventional portable telephone terminal device.

There is no sufficient effect at a frequency of 1 kHz because a wavelength of a sound wave is long, but sound pressure of a front direction is increased by about 0.5 dB. Also, the sound pressure of a front direction is increased by about 2 dB to 3 dB at frequencies of 2 kHz, 5 kHz and 10 kHz.

### (Effect of the first exemplary embodiment)

According to the first exemplary embodiment of the present invention, there is an effect of increasing the sound pressure of a terminal front direction. As a result, when a user listens a sound while watching an image displayed on a main display unit 102 disposed on a terminal front, it is easy to listen the sound. It is because the convex portions 109 and 110 are formed in a case portion closer to a terminal rear side than the speaker sound holes 105 to 107.

### (Second exemplary embodiment)

Next, a portable telephone terminal device according to a second exemplary embodiment of the present invention will be described below. The second exemplary embodiment is characterized in that an outlet of the speaker sound hole inclines in a front direction, so that a case portion closer to a rear side than the speaker sound hole protrudes more in a horizontal direction than a case portion of a front side.

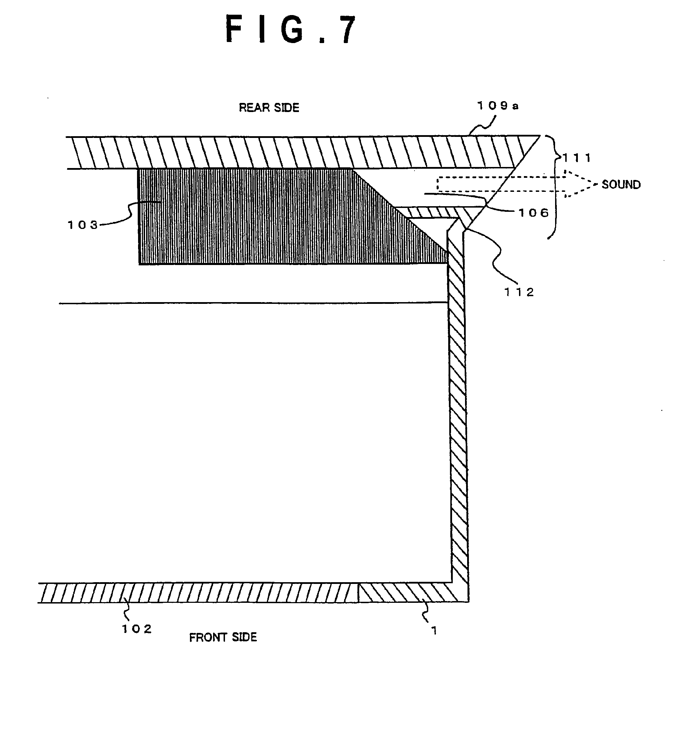

FIG. 7 is a cross-sectional view illustrating a cross-sectional shape of the portable telephone terminal device according to the second exemplary embodiment of the present invention, which corresponds to a cross-sectional shape taken along the line a-a' of FIG. 4(A).

Referring to FIG. 7, a portion near a rear of the right side of the case 1 inclines to a front side, and the speaker sound hole 106 for inducing a sound generated from the speaker 103 to the outside is formed in an inclined portion 111. As a result, a case portion closer to a rear side than the speaker sound hole 106 forms a convex portion 109a protruding more in a horizontal direction than a case portion of a front side 112. An end portion of the convex portion 109a has a shape which inclines to a front side. An angle of the inclined portion 111 may be, for example, approximately 30°, for example, to a front side. The horizontal length and the vertical length of the convex portion 109a may be same as those of the convex portion 109 according to the first exemplary embodiment of the present invention. Even though not shown in FIG. 7, a convex portion and an inclined portion which respectively have the same shape as the convex portion 109a and the inclined portion 111 are formed on the left side of the case 1. The other points excluding the above-mentioned points are same as the first exemplary embodiment of the present invention.

The convex portion 109a serves as a sound barrier like the convex portion 109 and suppresses a sound ejected from the speaker sound hole 106 being directed to a rear direction to thereby increase sound pressure of a front side.

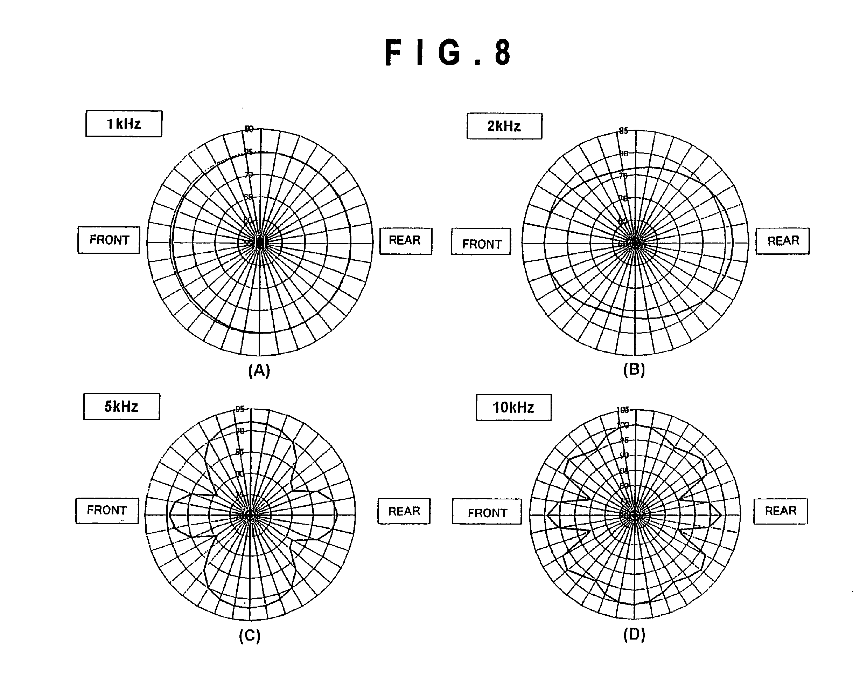

FIGs. 8(A) to 8(D) shows simulation results for sound pressure directivity characteristics of the portable telephone terminal device according to the second exemplary embodiment of the present invention. FIGs. 8(A), 8(B), 8(C), and 8(D) show simulation results for sound pressure directivity characteristics at frequencies of 1 kHz, 2 kHz, 5 kHz, and 10 kHz, respectively. When the simulation is performed, the angle of the inclined portion 111 is 30°, the horizontal length and the vertical length of the convex portion 109 are 2 mm and 25 mm, respectively, and the other conditions are same as the simulation of the conventional portable telephone terminal device. Like the first exemplary embodiment of the present invention, the sound pressure of a front direction is increased by about 2 dB to 3 dB at a high frequency of 2 kHz or more.

### (Effect of the second exemplary embodiment)

According to the second exemplary embodiment of the present invention, there is an effect of increasing sound pressure of a terminal front direction. As a result, when a user listens a sound while watching an image displayed on the main display unit 102 disposed on a terminal front, it is easy to listen the sound. It is because the convex portion 109a is formed in a case portion closer to a terminal rear side than the speaker sound hole 106.

### (Third exemplary embodiment)

Next, a portable telephone terminal device according to a third exemplary embodiment of the present invention will be described below. The third exemplary embodiment is characterized in that a notch is formed in a case portion closer to a terminal front side than a speaker sound hole.

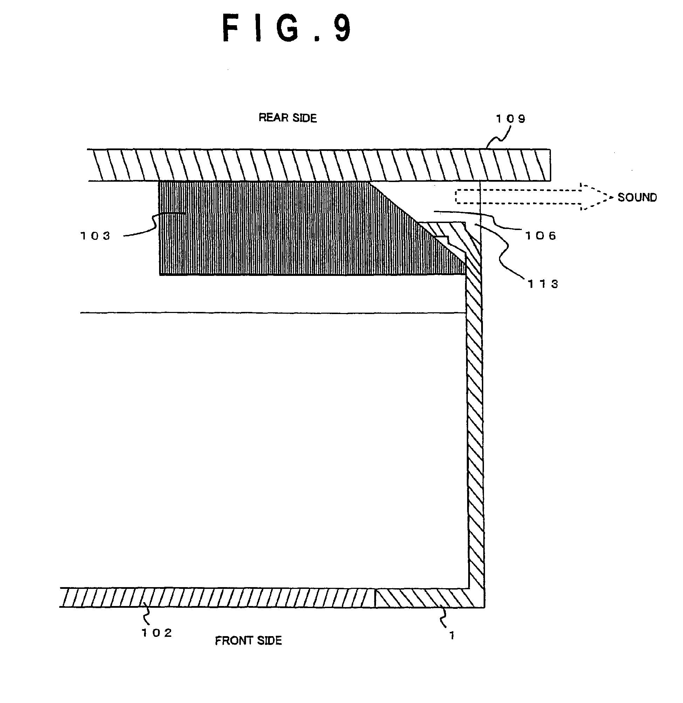

FIG. 9 is a cross-sectional view illustrating a cross-sectional shape of the portable telephone terminal device according to the third exemplary embodiment of the present invention, which corresponds to a cross-sectional shape taken along the line a-a' of FIG. 4(A).

Referring to FIG. 9, the speaker sound hole 106 for externally inducing a sound generated from the speaker 103 to the outside of the case 1 is installed at a right side of the case 1, and the convex portion 109 which protrudes more in a horizontal direction than a front side is processed in a case portion closer to a rear side than the speaker sound hole 106. A notch portion 113 is formed in a case portion closer to a front side than the speaker sound hole 106. The notch portion 113 is formed such that the diameter of the speaker sound hole 106 is gradually larger as it is closer to the outlet, thereby making a sound easily propagated in a front direction. Also, even though not shown in FIG. 9, a structure of the left side of the case 1 is same as that of the right side. The other points excluding the above-mentioned points are same as the first exemplary embodiment of the present invention.

Since the convex portion 109 serves as a sound barrier and the notch portion 113 makes a sound easily being propagated in a front direction of the portable telephone terminal device, sound pressure of a front direction can be increased. Also, the sound pressure of a front direction can be increased by forming the notch portion 113 without forming the convex portion 109, compared to the conventional portable telephone terminal device.

The first to third exemplary embodiments of the present invention have been described focusing on a folder-type portable telephone terminal device, but the present invention can be applied to candy bar-type or slide-type portable telephone terminal devices. Also, in the exemplary embodiments of the present invention described above, the speaker sound hole is formed closer to a rear side than a center of a case side, but it may be formed in a front side.

### (Effect of the third exemplary embodiment)

According to the third exemplary embodiment of the present invention, there is an effect of increasing sound pressure of a terminal front direction. As a result, when a user listens a sound while watching an image displayed on the main display unit 102 disposed on a terminal front, it is easy to listen the sound. It is because the convex portion 109 is formed in a case portion closer to a terminal rear side than the speaker sound hole 106 and the notch portion 113 is formed closer to a terminal front side than the speaker sound hole 106.

### Industrial Applicability

The present invention can be applied to a portable terminal device such as a portable telephone terminal device which includes a display unit at a case front and a speaker sound hole at a case side and employs a method of listening a sound ejected from the speaker sound hole while watching an image displayed on the display unit.

This application is based upon and claims the benefit of priority from Japanese patent application No. 2006-211666, filed on August 3, 2006, the disclosure of which is incorporated herein in its entirety by reference.

### Brief Description of the Drawings

FIGs. 1(A) to 1(C) are a front view, a side view and a rear view illustrating a configuration example of a conventional portable telephone terminal device;
FIG. 2 is a cross-sectional view illustrating a cross-sectional shape near a speaker sound hole 106 of the conventional portable telephone terminal device;
FIGs. 3(A) to 3(D) show simulation results for sound pressure directivity characteristics of the conventional portable telephone terminal device;
FIGs. 4(A) to 4(C) are a front view, a side view and a rear view illustrating a configuration example of a portable telephone terminal device according to a first exemplary embodiment of the present invention;
FIG. 5 is a cross-sectional view illustrating a cross-sectional shape near a speaker sound hole 106 of the portable telephone terminal device according to the first exemplary embodiment of the present invention;
FIGs. 6(A) to 6(D) show simulation results for sound pressure directivity characteristics of the portable telephone terminal device according to the first exemplary embodiment of the present invention;
FIG. 7 is a cross-sectional view illustrating a cross-sectional shape near the speaker sound hole 106 of a portable telephone terminal device according to a second exemplary embodiment of the present invention;
FIGs. 8(A) to 8(D) show simulation results for sound pressure directivity characteristics of the portable telephone terminal device according to the second exemplary embodiment of the present invention; and
FIG. 9 is a cross-sectional view illustrating a cross-sectional shape near the speaker sound hole 106 of a portable telephone terminal device according to a third exemplary embodiment of the present invention.

### Description of Reference Numerals

1 case
101 receiver
102 main display unit
103,104 speaker
105, 106, 107 speaker sound hole
108 sub display unit
109, 109a, 110 convex portion
111 inclined portion
112 inclined part
113 notch portion
2 case
21 key manipulating unit
22 microphone
3 hinge portion

## Claims

1. A portable terminal device, comprising:
a case, wherein a case portion, near an outlet of a sound hole for inducing a sound generated from a built-in speaker to a terminal side, which is processed in a shape for increasing sound pressure of a terminal front direction.

2. The portable terminal device of claim 1, wherein a case portion closer to a terminal rear side than the sound hole protrudes more in a horizontal direction than a case portion of a terminal front side.

3. The portable terminal device of claim 2, wherein a convex portion is formed in a case portion closer to a terminal rear side than the sound hole.

4. The portable terminal device of claim 2 or 3, wherein an inclined portion is formed in a case portion closer to a terminal rear side than the sound hole.

5. The portable terminal device of claim 1 or 2, wherein a notch portion is formed in a case portion closer to a terminal front side than the sound hole.

6. A case for a portable terminal device, wherein a case portion, near an outlet of a sound hole for inducing a sound generated from a built-in speaker to a terminal side, is processed in a shape for increasing sound pressure of a terminal front direction.

7. The case for the portable terminal device of claim 6, wherein a case portion closer to a terminal rear side than the sound hole protrudes more in a horizontal direction than a case portion of a terminal front side.
